# EUROPEAN PATENT APPLICATION

(11) **EP 4 797 588 A1**
(43) Date of publication of application: **26.08.2026**
(21) Application number: 25159630.0
(22) Date of filing: 24.02.2025
(51) Int. Cl.: H04L 1/00, H04B 10/516, H04L 7/00

(54) **EARLY IDLE PAYLOAD CORRECTION**

(71) Applicant: Nokia Solutions and Networks Oy, 02610 Espoo (FI)
(72) Inventor: Lefevre, Yannick, 3001 Heverlee (BE); Van Hoof, Werner, 2630 Aartselaar (BE)
(74) Representative: Ipsilon Belgium

(57) **Abstract**

Example embodiments describe an optical network node (270) configured to communicate in a passive optical network, PON (100); wherein the optical network node is configured to receive a stream (210) of forward error correction, FEC, codewords (211) respectively comprising at least a portion of one or more frames (220); wherein the respective frames comprise a header (222, 228) and a payload (223, 229); and wherein the optical network node is configured to perform:
- identifying (201) idle frames (221) within the respective FEC codewords (211) of the stream (210) of FEC codewords;
- for FEC codewords (211) that comprise at least a portion of one or more idle frames (221) , replacing (202, 241) at least a portion of the idle payloads (223) of the idle frames with a predetermined idle pattern (242); and
- thereafter, FEC decoding (203, 245) the stream of FEC codewords with the replaced idle payloads (244).

## Description

### Field of the Invention

Various example embodiments relate to forward error correcting, FEC, in a passive optical network.

### Background of the Invention

In a passive optical network, PON, an optical line terminal, OLT, broadcasts a downstream bitstream to a plurality of optical network units, ONUs. The downstream bitstream comprises a plurality of successive downstream frames, respectively intended for one or more of the ONUs. The downstream bitstream is typically forward error correction, FEC, encoded at the OLT side before transmission. As such, the downstream bitstream comprises a plurality of FEC codewords when received by the ONUs. This allows the ONUs to recover the data within the downstream bitstream, even when a number of errors are introduced due to the transmission over the PON.

Typically, the ONUs first FEC decode the entire downstream bitstream received from the OLT. FEC decoding refers to identifying errors within the respective FEC codewords and, if necessary and possible, correcting the identified errors. In doing so, each ONU within the PON obtains a complete FEC decoded version of the downstream bitstream, i.e. of all the FEC codewords. Thereafter, the ONUs extract the headers of the respective downstream frames as these include an identifier allowing to determine for which ONU the payload of the downstream frame is intended. The respective ONUs can then retain and process the payloads within the downstream frames intended for them and ignore the other downstream frames, i.e. idle frames and frames intended for other ONUs.

This has the problem that ONUs consume power to FEC decode idle frames within the downstream bitstream, only to be discarded after inspecting the header. FEC decoding an FEC codeword partially comprising idle frames or only comprising idle frames can consume a similar amount of power as FEC decoding an FEC codeword of non-idle frames. As such, FEC decoding idle frames results in excessive and futile power consumption, in particular when there is limited traffic within the PON and, thus, many idle frames are included within the downstream bitstream. It is thus a problem that a similar amount of power is consumed to FEC decode FEC codewords regardless of the amount of idle frames within the FEC codewords.

Additionally, recent PON standards are moving towards implementing low density parity check, LDPC, as FEC encoding technique rather than the previously prevalent Reed Solomon, RS, FEC encoding technique. The power consumption of LDPC decoding is substantially higher than RS decoding. As such, the problem of excessive and futile power consumption associated with needlessly FEC decoding idle frames is even higher for the latest and next-generation PON technologies.

### Summary of the Invention

The scope of protection sought for various embodiments of the invention is set out by the independent claims. The embodiments and features described in this specification that do not fall within the scope of the independent claims, if any, are to be interpreted as examples useful for understanding various embodiments of the invention.

Amongst others, it is an object of embodiments of the invention to reduce power consumption associated with FEC decoding in a passive optical network, PON.

This object is achieved, according to a first example aspect of the present disclosure, by an optical network node configured to communicate in a passive optical network, PON; wherein the optical network node is configured to receive a stream of forward error correction, FEC, codewords respectively comprising at least a portion of one or more frames; wherein the respective frames comprise a header and a payload; and wherein the optical network node is configured to perform:
- identifying idle frames within the respective FEC codewords of the stream of FEC codewords;
- for FEC codewords that comprise at least a portion of one or more idle frames , replacing at least a portion of the idle payloads of the idle frames with a predetermined idle pattern; and
- thereafter, FEC decoding the stream of FEC codewords with the replaced idle payloads.

The optical network node may receive the stream of FEC codewords from one or more transmitting network nodes within the PON. The predetermined idle pattern refers to a specific bit sequence transmitted as the idle payload within idle frames to the optical network node by the one or more transmitting network nodes when there is no actual user data, control information, or management traffic to communicate. Thus, the optical network node has prior knowledge of the specific idle pattern that should be received during the idle frames in the absence of errors. The optical network node may, for example, be an optical network unit, ONU, or an optical line terminal, OLT.

At least a portion of the idle payloads of idle frames within the respective FEC codewords is replaced by the predetermined idle pattern. This may include replacing the entire idle payload of idle frames within the respective FEC codewords. By replacing at least a portion of the idle payloads of the idle frames within the respective FEC codewords with the predetermined idle pattern, the optical network node effectively corrects that portion of the idle payload before FEC decoding the FEC codewords. In doing so, the amount of errors present within the FEC codewords comprising at least a portion of one or more idle frames is reduced. This reduces the power consumption at the optical network node as an FEC decoder may require less iterations to decode FEC codewords comprising idle frames. This further allows correcting more errors within the non-idle payload of FEC codewords partially comprising idle frames, i.e. it improves the FEC decoding performance of the optical network node. By replacing the entire idle payload portions within the respective FEC codewords with the predetermined idle pattern, unnecessarily consuming power to FEC decode idle frames may be avoided.

It is thus an advantage that the power consumption of FEC decoding by the optical network node and, thus, the power consumption of the optical network node, can be substantially reduced. The power consumption is particularly reduced when there is low traffic within the PON, e.g. during nighttime, during which a substantial number of idle frames are typically included within the stream of FEC codewords. It is a further advantage that the power consumption of this FEC decoding scales with the amount of traffic to the optical network node. It is a further advantage that this can easily be incorporated into existing optical network nodes operating according to PON standards.

According to an example embodiment, the optical network node may further be configured to perform identifying idle frames within the respective FEC codewords of the stream of FEC codewords based on a predetermined position of the idle frames within the stream of FEC codewords.

The optical network node may thus have knowledge about the position of idle frames within the stream of FEC codewords before receiving the stream. This predetermined position may, for example, be defined by a PON standard, may be communicated to the optical network node by a transmitting network node within the PON, or may be provisioned by an operator. This has the advantage that the idle payload can be replaced with the predetermined idle pattern without inspecting the header of the idle frames. The optical network node may further be configured to perform replacing a portion of the header, or the entire header, of the identified idle frames at the predetermined position within the stream in addition to the idle payload. This can further increase the amount of corrected errors before FEC decoding.

According to an example embodiment, the optical network node may further be configured to perform identifying idle frames within the respective FEC codewords of the stream of FEC codewords based on an identifier included within the header of the respective frames.

The identifier within the header of a frame may allow an optical network node to determine whether the frame is intended for that optical network node or not. An example of such an identifier in downstream frames is the XGEM port-ID according to the ITU-T G.987 standards or the ITU-T G.9804 standard. The identifier within a header of an idle frame may have a predetermined value, e.g. 0xFFFF. Detecting such a predetermined identifier value indicative of an idle frame may thus allow identifying idle frames within the stream of FEC codewords, thereby allowing to replace at least a portion of their idle payloads. This has the advantage that idle payloads of idle frames located anywhere within the respective FEC codewords can be replaced with the predetermined idle pattern. This has the further advantage that the amount and position of idle frames included within respective FEC codewords can be more flexible, e.g. it may vary from codeword to codeword.

According to an example embodiment, the header of the respective frames may further comprise one or more error correction bits for error correcting the header; and wherein the optical network node is further configured to perform:
- error correcting the headers of the frames based on the one or more error correction bits; and
- identifying idle frames based on the identifier within the error-corrected headers.

Error correcting the headers of the frames based on the one or more error correction bits may thus be performed before FEC decoding the FEC codewords. An example of such one or more error correction bits are the bits included within the Header Error Control, HEC, field of XGEM headers according to the ITU-T G.987 standards or the ITU-T G.9804 standard. These error-correction bits may comprise bits encoded by a Bose-Chaudhuri-Hocquenghem, BCH, code. The error-corrected headers may then be inspected to retrieve the respective identifiers within the headers, thereby allowing to identify idle frames within the stream of FEC codewords.

According to an example embodiment, identifying idle frames corresponds to identifying frames having a predetermined identifier value; and wherein replacing at least a portion of the idle payloads of the idle frames with the predetermined idle pattern corresponds to replacing at least a portion of the payload of the identified frames with a predetermined bit pattern.

In other words, the optical network node may be configured to replace at least a portion of the payload of any frame having a certain identifier in its header with a predetermined bit pattern. The frames having the predetermined identifier value may also be frames comprising an idle payload without being labelled as an 'idle frame' according to the applicable standard. The optical network node may further be configured to both identify and replace idle frames in addition to identifying and replacing frames with a certain identifier value.

According to an example embodiment, the optical network node may further be configured to perform receiving predetermined idle pattern information from a transmitting network node within the passive optical network that is configured to transmit the stream of FEC codewords to the optical network node.

In other words, the idle pattern within the idle frames may be signalled by a transmitting network node to the optical network node. This can, for example, be achieved by means of a Physical layer operation and management, PLOAM, message or an ONU management and control interface, OMCI, message. The predetermined idle pattern information may be any information that allows the optical network node to determine the predetermined idle pattern. The optical network node may, for example, receive the predetermined idle pattern itself from the transmitting network node. Alternatively, the optical network node may perform some operations on the received information to determine the predetermined idle pattern, e.g. determining a pseudorandom binary sequence, PRBS, as the idle pattern from an order and seed of the PRBS received as the predetermined idle pattern information. If the optical network node is an ONU, the transmitting network node may be an OLT. Alternatively, if the optical network node is an OLT, the transmitting network node may be an ONU.

According to an example embodiment, the optical network node may further be configured to perform providing predetermined idle pattern information to a transmitting network node and instructing the transmitting network node to transmit the predetermined idle pattern as idle payload within idle frames, wherein the transmitting network node is configured to transmit the stream of FEC codewords to the optical network node.

In other words, the optical network node may signal or communicate to the transmitting network the idle pattern it expects in idle frames received from said transmitting network node. This can be achieved by providing predetermined idle pattern information to the transmitting network node, e.g. by a PLOAM message or OMCI message. The predetermined idle pattern information may be any information that allows the transmitting network node to determine the predetermined idle pattern expected or desired by the optical network node.

According to an example embodiment, the optical network node may further be configured to perform determining the predetermined idle pattern based on an FEC-decoded idle payload of at least one idle frame.

In other words, the predetermined idle pattern may be determined or discovered by the optical network node during standard operation without idle payload replacement. To this end, the optical network node may, during a first period, be configured to FEC decode the stream of FEC codewords without identifying and replacing idle payloads of idle frames. In doing so, errors present within the received idle payloads may be FEC corrected. The optical network node may then retrieve the predetermined idle pattern by inspecting the FEC decoded idle payloads. The optical network node may further perform this for a plurality of idle payloads and compare their respectively retrieved idle patterns to avoid that errors uncorrected by the FEC decoding can result in an erroneous predetermined idle pattern.

According to an example embodiment, the stream of FEC codewords may comprise one or more idle frames inserted within the respective FEC codewords to control an FEC code rate.

The one or more idle frames may be inserted within the respective FEC codewords by a transmitting network node within the passive optical network that is configured to transmit the stream of FEC codewords to the optical network node. Introducing idle frames within the FEC codewords received by the optical network node decreases the FEC code rate, as a larger portion of the FEC codewords consists of redundant bits relative to the actual information bits due to the replacing of the idle frames with the predetermined idle pattern. This allows controlling the FEC code rate and the error correcting capabilities of the FEC code by scheduling more or fewer idle frames within the FEC codewords. In doing so, the FEC code rate can be adjusted during operation, i.e. on the fly, without additional communication to agree on an FEC code rate between the transmitting network node and the optical network node. This has the further advantage that the available or possible FEC code rate options are not limited to a predefined set of valid options. It is a further advantage that this allows controlling the FEC code rate in PON standards which have only a single FEC code rate defined, e.g. downstream 50G PON.

According to an example embodiment, the predetermined idle pattern may be a fixed-valued bit sequence, a deterministically generated bit sequence using a predetermined seed, or a periodic bit sequence.

A fixed-valued bit sequence may, for example, be a bit sequence only comprising ones or a bit sequence only comprising zeros. A deterministically generated bit sequence using a predetermined seed may, for example, be a Pseudorandom Binary Sequence, PRBS; a Gold code; a Kasami sequence; a Barker code; a Walsh-Hadamard Sequence; a De Bruijn sequence; a Thue-Morse sequence; a Sobol sequence; a chaotic sequence; a T-sequence; or a Galois sequence. A periodic bit sequence may, for example, be an alternating sequence of ones and zeros.

According to an example embodiment, replacing the idle payloads of the idle frames with the predetermined idle pattern comprises adjusting bit values of the idle bits, adjusting signs of log-likelihood ratios for the idle bits, or adjusting signs and magnitudes of log-likelihood ratios for the idle bits.

In so-called soft-input implementations the received stream of FEC codewords may be represented by likelihoods or probabilities of bit values based on the received optical signal and noise distribution, i.e. a log-likelihood ratio, Ilr. In such a soft-input implementation, the optical network node may be configured to adjust the signs of the Ilrs of the respective idle bits within the idle payload that are being replaced based on the expected value of the corresponding bit within the predetermined idle pattern. Additionally, the magnitude of the Ilrs of the respective idle bits may be increased as the idle bit values are exactly known from the predetermined idle pattern. This can further improve the decoding performance, i.e. the number of errors that can be corrected within the other bits of the FEC codeword. This can also further reduce the number of iterations required to decode the FEC codeword, thereby reducing the power consumption.

In so-called hard-input implementations the received stream of FEC codewords may be represented by a sequence of binary bit values without additional information about the confidence or likelihood of the received bit value. In such an implementation, the optical network node may be configured to adjust the values of the respective idle bits that are being replaced to the corresponding bit value within the predetermine idle pattern.

According to an example embodiment, the FEC codewords are encoded by a Low-Density Parity-Check, LDPC, code or by a Reed Solomon code.

According to an example embodiment, the optical network node may be an optical network unit, ONU, configured to communicate in a passive optical network, PON, with an optical line terminal, OLT; and wherein the ONU is configured to receive the stream of FEC codewords respectively comprising at least a portion of one or more downstream frames broadcasted by the OLT over the PON.

According to an example embodiment, the optical network node may be an optical line terminal, OLT, configured to communicate in a passive optical network, PON, with one or more optical network units, ONUs; and wherein the OLT is configured to receive the stream of FEC codewords comprising at least a portion of one or more upstream frames transmitted by the one or more ONUs.

According to a second example aspect, the disclosure relates to a transmitting network node configured to transmit a stream of forward error correction, FEC, codewords to at least one optical network node according to the first aspect within a passive optical network, PON; wherein the stream of FEC codewords respectively comprises at least a portion of one or more frames; wherein the respective frames comprise a header and a payload; and wherein the optical network node is configured to perform:
- controlling an FEC code rate by scheduling one or more idle frames within respective FEC codewords of the stream.

Introducing idle frames within the FEC codewords transmitted to an optical network node according to the first example aspect decreases the FEC code rate, as a larger portion of the FEC codewords consists of redundant bits relative to the actual information bits due to the replacing of the idle frames with the predetermined idle pattern. As such, the FEC code rate and the error correcting capabilities of the FEC code may be controlled by scheduling more or fewer idle frames within the FEC codewords. This allows adjusting the effective FEC code during operation, i.e. on the fly, without additional communication to agree on a FEC code rate between the transmitting network node and the optical network node. This has the further advantage that the available or possible FEC code rate options are not limited to a predefined set of valid options. It is a further advantage that this allows controlling the FEC code rate in PON standards which have only a single FEC code rate defined, e.g. 50G PON.

According to a third example aspect, the disclosure relates to a passive optical network, PON, comprising one or more optical network nodes (270) according to the first aspect and at least one transmitting network node configured to transmit the stream of FEC codewords to the one or more optical network nodes; and wherein the at least one transmitting network node is further configured to perform:
- controlling an FEC code rate by scheduling one or more idle frames within the respective FEC codewords of the stream.

The PON may, for example, comprise one OLT functioning as the optical network node and a plurality of ONUs functioning as the transmitting network nodes. In this case, the FEC code rate of each upstream transmission or burst received at the OLT may be controlled by the transmitting ONU by scheduling one or more idle frames within the upstream frames.

Alternatively, the PON may comprise one OLT functioning as the transmitting network node and a plurality of ONUs functioning as the optical network nodes. In this case, the FEC code rate of the downstream transmissions received at the ONUs may be controlled by the OLT by scheduling one or more idle frames within the downstream frames.

According to a fourth example aspect, a method for forward error correcting, FEC, decoding in a passive optical network, PON; wherein the PON comprises an optical network node according to the first aspect; the method comprising:
- receiving, by the optical network node, a stream of FEC codewords respectively comprising at least a portion of one or more frames from a transmitting network node within the PON;
- identifying idle frames within the respective FEC codewords of the stream of FEC codewords;
- replacing, by the optical network node, at least a portion of the idle payloads of idle frames within FEC codewords that comprise at least a portion of one or more idle frames with a predetermined idle pattern; and
- thereafter, FEC decoding the stream of FEC codewords with the replaced idle payloads by the optical network node.

### Brief Description of the Drawings

Fig. 1 shows a schematic block diagram of an example passive optical network, PON;
Fig. 2 shows an example embodiment of an optical network node configured to perform early idle payload correction before FEC decoding a received stream of FEC codewords;
Fig. 3 shows an example embodiment of an optical network node configured to identify idle frames within the FEC codewords of the stream of FEC codewords based on an identifier included within the header of the frames;
Fig. 4A shows an example embodiment of idle frames scheduled at the end of respective FEC codewords to control the FEC code rate;
Fig. 4B shows an example embodiment of idle frames scheduled at the end of respective FEC codewords to control the FEC code rate;
Fig. 4C shows an example embodiment of idle frames scheduled at the end of respective FEC codewords to control the FEC code rate;
Fig. 4D shows an example embodiment of idle frames scheduled at the end of respective FEC codewords to control the FEC code rate; and
Fig. 5 shows steps of a method for forward error correcting, FEC, decoding in a passive optical network, PON.

### Detailed Description of Embodiment(s)

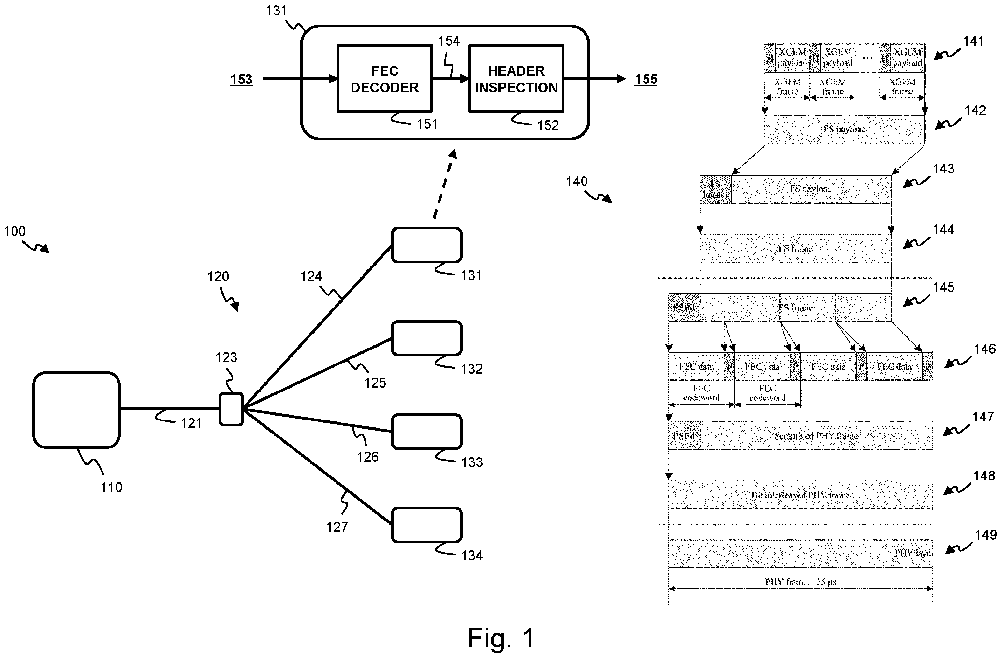

Fig.1 shows a schematic block diagram of an example passive optical network 100, PON. The optical network 100 comprises an optical line terminal 110, OLT, and a plurality of optical network units, ONUs 131, 132, 133, 134 connected via an optical distribution network, ODN 120. In this example, the OLT 110 is connected to four ONUs 131, 132, 133, 134, however, the OLT 110 may be connected to fewer or more endpoints. The ODN 120 has a tree structure comprising an optical feeder fibre 121, one or more passive optical splitters/multiplexors 123, and a plurality of optical distribution fibres or drop fibres 124, 125, 126, 127 that connect the splitter/multiplexor 123 to the respective ONUs 131, 132, 133, 134. In the downstream, the passive optical splitter/multiplexor 123 splits the optical signal coming from the OLT 110 into lower power optical signals for the connected ONUs 131, 132, 133, 134, while in the upstream direction, the passive optical splitter/multiplexor 123 multiplexes the optical signals coming from the connected ONUs 131, 132, 133, 134 into a burst signal for the OLT 110.

The passive optical network 100 may be a Gigabit passive optical network, GPON, according to the ITU-T G.984 standard, a 10x Gigabit passive optical network, 10G-PON, according to the ITU-T G.987 standard, a 10G symmetrical XGS-PON according to the ITU-T G.9807 standard, a four-channel 10G symmetrical NG-PON2 according to the ITU-T G.989 standard, a 25GS-PON, a 50G-PON according to the ITU-T G.9804 standard, or a next generation passive optical network, NG-PON. The passive optical network 100 may implement time-division multiplexing, TDM, or time- and wavelength-division multiplexing, TWDM.

Fig. 1 further shows an example 140 of downstream packet mapping according to the ITU-T G.9804.2 standard. The downstream packet mapping 140 allows mapping higher-layer SDU packets (not shown in Fig. 1) to the physical layer, PHY-, frame 149, i.e. the bit stream that is transmitted over the PON 100.

The SDU packets are first encapsulated in a series of XGEM frames 141, also generally referred to as frames. Each frame 141 comprises a header and a payload. The frames jointly form the Framing Sublayer, FS, payload 142. The FS payload 142 is prepended with a FS header 143 to form an FS frame 144. The FS header is a synchronization structure that provides frame synchronization and identification of frame boundaries. The FS frame 144 is in turn prepended by a downstream physical synchronization block, PSBd 145. The PSBd is a synchronization structure that allows the ONUs 131 - 134 to synchronize with the OLT 110 for downstream communication. Hereafter, the obtained bit stream 145 is typically FEC encoded to obtain a stream of FEC codewords 146. The FEC codewords 146 may be obtained by dividing bitstream 145 into codewords and generating, for each codeword, parity based on the used FEC code. The used FEC code may, for example, be a Reed Solomon code or a Low-Density Parity-Check, LDPC, code. This allows the ONUs 131 - 134 to recover the FEC data from the downstream, i.e. bit stream 145, even when a number of errors are introduced due to the transmission over the PON 100. The stream of FEC codewords 146 may further be scrambled 147 and interleaved 148 to obtain the PHY-frame 149 transmitted from the OLT 110 to the ONUs 131 - 134.

Typically, the ONUs 131 - 134 first FEC decode the entire downstream bitstream received from the OLT 110. FEC decoding refers to identifying errors within the respective FEC codewords 146 and, if necessary and possible, correcting the identified errors. This may, for example, be performed by a FEC decoder circuitry 151. The FEC decoder circuitry 151 may thus receive 153 the PHY-frames 149 transmitted by the OLT 110. It will be apparent that the FEC decoder circuitry 151 is configured to FEC decode the received stream of FEC codewords 153 according to the same FEC code as used to encode them.

By the FEC decoding performed at 151, each ONU 131 - 134 within the PON obtains a complete FEC decoded version 154 of the stream of FEC codewords 146 broadcasted by the OLT 110, i.e. a decoded version of all the FEC codewords. Thereafter, the ONUs 131 - 134 extract the headers of the respective downstream frames 141 from the stream of decoded FEC codewords 154. The extracted headers are subsequently inspected in 152 as the headers include an XGEM port identifier allowing to determine for which ONU 131 - 134 the payload of that XGEM frame is intended. The respective ONUs 131 - 134 can then retain and process the payloads within the XGEM frames intended for them 155 and ignore the other XGEM frames, i.e. idle frames and frames intended for other ONUs.

This has the problem that an ONU 131 - 134 consumes power to FEC decode idle frames within the stream 153, only to be discarded after inspecting 152 the XGEM header. FEC decoding an FEC codeword partially comprising idle XGEM frames or only comprising idle XGEM frames may on average consume a similar amount of power as FEC decoding an FEC codeword with non-idle frames. As such, FEC decoding idle frames results in excessive and futile power consumption, in particular when there is limited traffic within the PON 100 and, thus, many idle frames are included within the downstream bitstream. It is thus a problem that a similar amount of power is consumed to FEC decode FEC codewords regardless of the amount of idle frames within the FEC codewords.

Additionally, recent PON standards such as, for example, ITU-T G.9804 are increasingly implementing low density parity check, LDPC, as FEC code rather than the previously prevalent Reed Solomon, RS, code. The power consumption of LDPC decoding is substantially higher than RS decoding. As such, the problem of excessive and futile power consumption associated with needlessly FEC decoding idle frames is even higher for the latest and next-generation PON technologies and, thus, promises to become even more relevant in the near future.

While the problems and challenges have been described above for the downstream communication in a PON 100, it will be apparent that these problems and challenges also exist in upstream communication. Typically, an OLT 110 first FEC decodes the entire upstream bitstream received from the ONUs 131 - 134 within the PON 100. In doing so, the OLT 110 obtains a complete FEC decoded version of the upstream bitstream, i.e. of all the FEC codewords. It is only after FEC decoding the entire upstream bitstream that the idle upstream frames, i.e. frames without a payload intended for the OLT, are identified and ignored. This results in excessive and futile power consumption at the OLT, in particular when there is limited traffic within the PON and thus many idle upstream frames are present within the upstream bitstream. As such, the problem of excessive and futile power consumption associated with needlessly FEC decoding idle frames also exists for upstream communication in a PON 100.

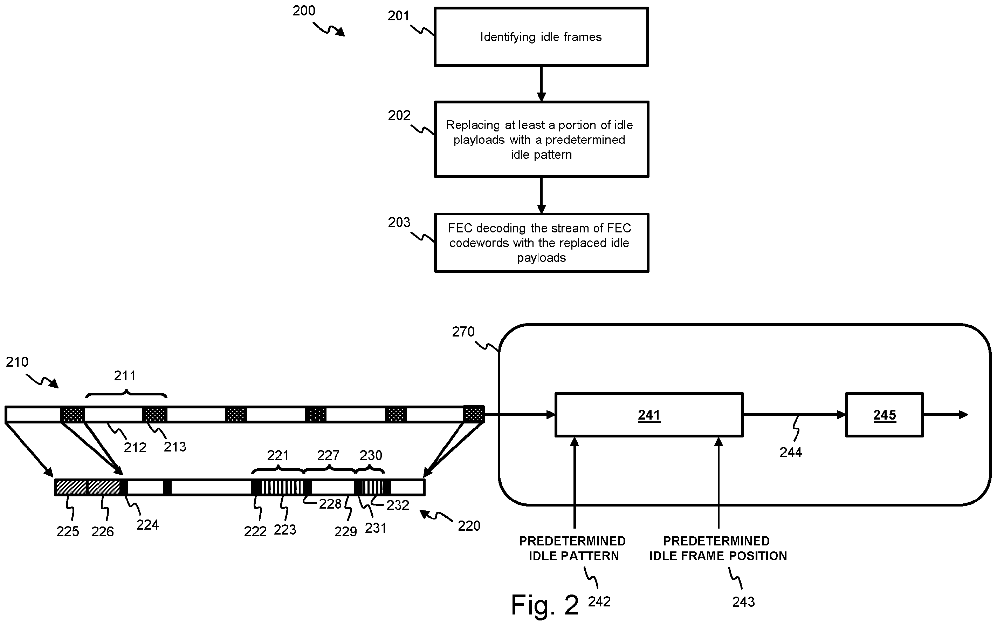

Fig. 2 shows an example embodiment of an optical network node 270 configured to perform idle payload correction before FEC decoding a received stream 210 of FEC codewords 211. To this end, optical network node 270 is configured to identify 201 idle frames 221 and to replace 202 at least a portion of their idle payload 223 with a predetermined idle pattern before FEC decoding 203 the stream 210 of FEC codewords 211.

The received stream 210 of FEC codewords 211 may be a PHY-frame as described above in relation to Fig. 1. The respective FEC codewords 211 comprise data 212 and a parity 213. The respective FEC codewords 211 may be encoded by a Reed Solomon, RS, code; a Low-Density Parity-Check, LDPC, code; or any other FEC code. The FEC codewords 211 respectively comprise at least a portion of one or more frames 220. In other words, a FEC codeword 211 may comprise a fractional or non-integer number of frames 220. For example, FEC codeword 211 may comprise approximately 1.6 frames; 2.1 frames; or 0.8 frames. The FEC codewords 211 may further comprise a portion of one or more idle frames, a portion of one or more non-idle frames, or a combination thereof. In other words, a FEC codeword 211 may comprise a fractional or non-integer number of idle frames in addition to a fractional or non-integer number of non-idle frames. For example, FEC codeword 211 may comprise 1.2 idle frames and 3.6 non-idle frames. It will be apparent that the FEC codewords 211 may also comprise an integer number of frames 220. The respective frames 220 comprise a header 222, 228 and a payload 223, 229. An idle frame 221, 230 comprises an idle payload 221, 232 of idle bits. A non-idle frame 227 comprises a non-idle payload 229 of non-idle bits.

The optical network node 270 may be an optical network unit, e.g. ONU 131 - 134 in Fig. 1, configured to communicate in a passive optical network, PON, with an optical line terminal, OLT. Such an optical network node 270, i.e. an ONU, may be configured to receive the stream 210 of FEC codewords 211 broadcasted by the OLT over the PON. In other words, if the optical network node 270 is an ONU, the stream 210 of FEC codewords comprises downstream frames broadcasted by an OLT.

In an alternative embodiment, the optical network node 270 may be an optical line terminal, e.g. OLT 110 in Fig. 1, configured to communicate in a PON with one or more ONUs. Such an optical network node 270, i.e. an OLT, may be configured to receive the stream 210 of FEC codewords 211 transmitted by the one or more ONUs. In other words, if the optical network node 270 is an OLT, the stream 210 of FEC codewords comprises upstream frames transmitted by one or more ONUs.

The optical network node 270 is configured to identify 201 idle frames 221, 230 within the respective FEC codewords 211 of the received stream 210. Identifying idle frames 221, 230 within the respective FEC codewords 211 may be achieved based on a predetermined position 243 of the idle frames 221, 230 within the stream 210 of FEC codewords 211. The optical network node 270 may thus have knowledge about the position of idle frames 221, 230 within the stream 210 of FEC codewords before receiving the stream. This predetermined position 243 may, for example, be defined by a PON standard, may be communicated to the optical network node 270 by a transmitting network node within the PON, or may be provisioned by an operator. This has the advantage that the idle payloads 223, 232 can be located and identified without inspecting the header 222, 231 of the idle frames 221, 230.

After identifying the idle frames 221, 230, the optical network node is configured to replace 202 at least a portion of the idle payloads 223, 232 with a predetermined idle pattern 242. In other words, some or all of the idle bits within the idle payloads 223, 232 may be replaced with a known idle bit pattern. It will be apparent that the identified idle frames 221, 230 may be spread across two or more adjacent FEC codewords 210 in the stream 210 and, thus, the replacing 202 may be performed for FEC codewords that comprise at least a portion of idle frames 221, 230.

The predetermined idle pattern 242 refers to a specific bit sequence transmitted as the idle payload 223, 232 within idle frames 221, 230 to the optical network node 270 when there is no actual user data, control information, or management traffic to communicate. Thus, the optical network node 270 has prior knowledge of the specific idle pattern that should be received during the idle frames 221, 230 in the absence of errors.

The predetermined idle pattern 242 may be a fixed-valued bit sequence, e.g. a bit sequence only comprising ones or a bit sequence only comprising zeros. Alternatively, the predetermined idle pattern 242 may be a deterministically generated bit sequence using a predetermined seed, e.g. a Pseudorandom Binary Sequence, PRBS; a Gold code; a Kasami sequence; a Barker code; a Walsh-Hadamard Sequence; a De Bruijn sequence; a Thue-Morse sequence; a Sobol sequence; a chaotic sequence; a T-sequence; or a Galois sequence. Alternatively, the predetermined idle pattern 242 may be a periodic bit sequence, e.g. an alternating sequence of ones and zeros.

The predetermined idle pattern 242 may be signalled or communicated to the optical network node 270 at least once prior to performing the idle payload correction according to the present disclosure. In doing so, the optical network node 270 can become aware of the idle pattern that should be present within errorless idle payloads 223, 232.

To this end, the optical network node 270 may be configured to receive predetermined idle pattern information from a transmitting network node within the PON that is configured to transmit the stream 210 of FEC codewords to the optical network node 270. Thus, if the optical network node 270 is an ONU, the transmitting network node may be an OLT. Alternatively, if the optical network node 270 is an OLT, the transmitting network node may be an ONU. The received predetermined idle pattern information may be any information that allows the optical network node 270 to determine the predetermined idle pattern 242. The optical network node 270 may, for example, receive the predetermined idle pattern itself from the transmitting network node. Alternatively, the optical network node may perform some operations on the received information to determine the predetermined idle pattern 242. For example, the received information may be an order and seed of a PRBS and the optical network node 270 may be configured to determine the predetermined idle pattern, i.e. the PRBS, from the received order and seed.

Alternatively, the predetermined idle pattern may be determined or discovered by the optical network node during standard operation without idle payload correction according to the present disclosure. Standard operation may thus refer here to FEC decoding the entire stream 210 of FEC codewords and thereafter inspecting the FEC-decoded headers as described in relation to Fig. 1. In this embodiment, the optical network node 270 may be configured to, during a first period, FEC decode the stream 210 of FEC codewords without identifying 201 and replacing 202 idle payloads 223, 232 of idle frames 221, 230. In doing so, errors present within the received idle payloads 223, 232 may be FEC corrected. The optical network node 270 may then be configured to retrieve the predetermined idle pattern 242 by inspecting the FEC decoded idle payloads. The optical network node 270 may further perform this FEC decoding for a plurality of idle payloads received within one or more successive streams 210 and compare their respectively retrieved idle patterns. This can avoid that errors uncorrected by the FEC decoding result in an erroneous predetermined idle pattern 242 and, thus, in erroneous replacements in step 202. After determining the predetermined idle pattern based on the FEC decoded idle payload of at least one idle frame, the optical network node may perform idle payload correction according to the present disclosure.

Alternatively, the predetermined idle pattern 242 may be defined by the standard according to which the PON is operating. Alternatively, the predetermined idle pattern 242 may be defined by an operator.

It will be apparent that, if the optical network node is an OLT 270, the predetermined idle pattern 242 may be substantially the same for all ONUs transmitting upstream frames to the OLT. Alternatively, the predetermined idle pattern may be different for some or all of the ONUs transmitting upstream frames to the OLT.

The identifying 201 of idle frames and the replacing 202 with the predetermined idle pattern 242 may be performed by a circuitry 241 included within the optical network node 270. This circuitry 241 may output 244 the stream of FEC codewords as received but with the replaced idle payloads instead of the received idle payloads. This stream of FEC codewords with replaced idle payloads is thereafter FEC decoded, e.g. by decoder circuitry 245.

By replacing at least a portion of the idle payloads 223, 232 of the idle frames 221, 230 with the predetermined idle pattern 242, the optical network node 270 effectively corrects that portion of the idle payload before FEC decoding 203 the FEC codewords. In doing so, the amount of errors present within the FEC codewords comprising at least a portion of one or more idle frames 221, 230 is reduced. This reduces the power consumption at the optical network node 270 as an FEC decoder 245 may require less iterations to decode FEC codewords 211 comprising idle frame portions 221, 230. This further allows correcting more errors within the non-idle payload 229 of FEC codewords partially comprising idle frames, i.e. it improves the FEC decoding performance of the optical network node 270. By replacing the entire idle payload portions 221, 230 within the respective FEC codewords with the predetermined idle pattern 242, unnecessarily consuming power to FEC decode idle frames may be avoided.

It is thus an advantage that the power consumption of FEC decoding by an optical network node 270 and, thus, the power consumption of the optical network node 270 itself, can be substantially reduced. The power consumption is particularly reduced when there is low traffic within a PON, e.g. during nighttime, during which a substantial number of idle frames 221, 230 are typically included within the stream 210 of FEC codewords. It is a further advantage that the power consumption of this FEC decoding scales with the amount of traffic to the optical network node 270. It is a further advantage that this can be incorporated into existing optical network nodes operating according to PON standards without requiring changes to the PON standards.

In so-called soft-input implementations, the received stream 210 may be represented by likelihoods or probabilities of bit values based on the received optical signal and noise distribution, i.e. a log-likelihood ratio, Ilr. In such a soft-input implementation, the optical network node 270 may be configured to adjust the signs of the llrs of the respective idle bits within the idle payload 223, 232 that are being replaced based on the expected value of the corresponding bit within the predetermined idle pattern 242. A positive sign of an Ilr may for example indicate that the bit is more likely to have a value of zero than a value of one. A negative sign of an Ilr may indicate that the bit is more likely to have a value of one than a value of zero.

Additionally, the magnitude of the Ilrs of the respective idle bits may be increased as the idle bit values are exactly known from the predetermined idle pattern. The magnitude of a Ilr represent the confidence in the bit value. Using a higher Ilr magnitude for a known bit value can further improve the decoding performance, i.e. the number of errors that can be corrected within the other bits of the FEC codeword. This can also further reduce the number of iterations required to decode the FEC codeword, thereby reducing the power consumption.

Alternatively, in so-called hard-input implementations, the received stream 210 of FEC codewords 211 may be represented by a sequence of binary bit values without additional information about the confidence or likelihood of the received bit value. In such an implementation, the optical network node 270 may simply be configured to adjust the values of the respective idle bits that are being replaced to the corresponding bit value within the predetermine idle pattern. In other words, the optical network node 270 may be configured to overwrite the idle bits within the idle payloads 223, 232 by the bits defined by the predetermined idle pattern.

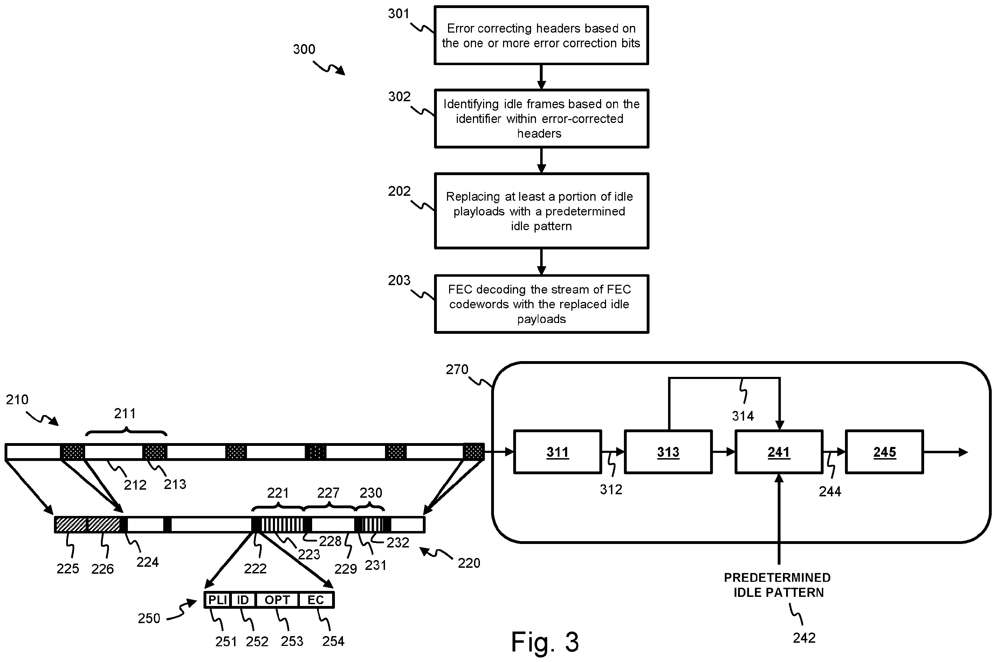

Fig. 3 shows an example embodiment of an optical network node 270 configured to identify idle frames 221, 230 within the FEC codewords 211 of the stream 210 of FEC codewords based on an identifier 252 included within the header 222 of the frames 220.

The respective frames 220 comprise a header 222, 228, 231 and a payload 223, 229, 232. The headers 222, 228, 231 may comprise at least one or more error correction bits 254 and an identifier 252. The identifier 252 within the header 222 of a frame 221 typically allows an ONU to determine whether the frame 221 is intended for that ONU or not. These identifiers 252 may be assigned to logical connections associated with the respective ONUs of a PON. These identifiers 252 typically correspond to a specific data flow associated with a particular service or user. By inspecting the identifier 252 and comparing it with the identifiers assigned to the logical connections of the ONU, the ONU may thus determine whether the downstream frame is intended for it. An example of such an identifier 252 is the XGEM port-ID according to the ITU-T G.987 standards, the ITU-T G.9804 standard, the ITU-T 989 standard, the ITUT-G.9807 standard, or the 25GS-PON MSA standard. The identifier 252 within the header of a frame 221 typically also allows to determine whether the frame is an idle frame 221, 230. Idle frames typically have a predetermined identifier value, e.g. 0xFFFF.

The one or more error correction bits 254 within the header 222 of a frame 221 typically allow an ONU to determine whether it received a valid header 222 or if it comprises excessive errors. Typically, ONUs operating according to current PON standards are configured to detect errors and/or correct the detected errors based on these bits 254 after FEC decoding the stream 210 of FEC codewords 211. An example of such one or more error correction bits 254 are the bits included within the Header Error Control, HEC, field of XGEM headers according to the ITU-T G.987 standards or the ITU-T G.9804 standard. The optical network node 270 according to the present disclosure may be configured to use these available error correction bits 254 to correct the error within headers 222, 228, 231 of frames 221 before FEC decoding.

The error correction bits 254 may comprise bits encoded by a Bose-Chaudhuri-Hocquenghem, BCH, code. The error correction bits 254 may, for example, comprise 12 bits of a BCH(63, 12, 2) code, which allows correcting up to 2 bit errors. Thus, in the example of an XGEM frame according to the ITU-T G.987 standards, at most 2 errors among 63 header bits can be corrected. Most ONUs have a high probability of being able to correct a header 222, 228, 231 based on the BCH code, i.e. the one or more error correction bits 254. In other words, most of the time a frame header 222, 228, 232 can be corrected purely by decoding based on the one or more error correction bits 254, without having to FEC decode first.

The optical network node 270 may thus be configured to first perform error correcting 301 of the headers 222, 228, 231 of the frames 220 based on the one or more error correction bits 254. This may, for example, be performed by an error correction circuitry 311 provided within the optical network node 270. The error-corrected headers 312 may then be inspected, e.g. by a header inspection circuitry 313, to retrieve the respective identifiers 252 indicative for idle frames 221, 230 or indicative for which of the ONUs the payload is intended. Based on the identifiers 252 of the respective error-corrected headers, the optical network node 270 may then be configured to perform identifying 302 idle frames 221, 230 with an idle payload 223, 232. The identified idle frames 221, 230 thus have an identifier 252 within their header 222, 231 that matches a predetermined value indicative for idle frames.

Thereafter, the optical network node 270 replaces at least a portion of the identified idle payloads 223, 232 with the predetermined idle pattern 242. This may, for example, be achieved by circuitry 241. Circuitry 241 may receive the entire stream 210 of FEC codewords 211, i.e. all FEC codewords, together with a control signal 314 indicative for which portion of the FEC codewords 211 should be replaced by the predetermined idle pattern 242. Thereafter, the FEC decoding 203 may thus be performed by a FEC decoder circuitry 245 on a bit stream 244 comprising the replaced idle payloads and error-corrected headers.

This has the advantage that idle payloads 223, 232 of idle frames 221, 230 located anywhere within the respective FEC codewords can be replaced with the predetermined idle pattern 242. This has the further advantage that the amount and position of idle frames included within respective FEC codewords can be more flexible, e.g. it may vary from codeword to codeword.

Alternatively or complementary, the optical network node 270 may be configured to identify frames having a predetermined identifier value and to replace the payload of these frames with a predetermined bit pattern. It will be apparent that the payload of these frames may also comprise bits without actual user data, control information, or management traffic. In other words, the frames having the predetermined identifier value may be frames comprising an idle payload without being labelled as an 'idle frame' according to the applicable standard. For example, if the applicable standard labels idle frames by a 0xFFFF identifier value, the predetermined identifier value may be a non-standardized identifier value indicative for a frame with an idle payload, e.g. UVWX.

Identifying such frames may be substantially similar to the identifying of idle frames in steps 301 and 302. Thus, the optical network node 270 may be configured to first perform error correcting 301 of the headers 222, 228, 231 of the frames 220 based on the one or more error correction bits 254. The error-corrected headers 312 may then be inspected. Based on the identifier values within the respective error-corrected headers, the optical network node 270 may then be configured to perform identifying frames having the predetermined identifier value. Next, the optical network node may be configured to replace at least a portion of these identified frames by a predetermined bit pattern. This predetermined bit pattern may be a fixed-valued bit sequence, a deterministically generated bit sequence, or a periodic bit sequence. The predetermined bit pattern may further be obtained by the optical network node 270 similarly to the predetermined idle pattern as described in relation to Fig. 2, i.e. signalled or communicated to the optical network node 270, received from a transmitting network node within the PON, determined or discovered by the optical network node 270, defined by a PON standard, or defined by an operator.

In order to be able to error correct 301 the headers 222, 228, 231 before FEC decoding 203, the optical network node 270 should be capable of locating the respective headers 222, 228, 231 within the stream 210 of FEC codewords. To this end, the optical network node 270 may further be configured to locate the header 228, 231 of a frame 227, 230 within the stream 210 of FEC codewords based on the length of the payload 223, 229 of the preceding frame 221, 227. The length of the payload 223, 229 may be included within the header 222, 228 as a payload length indicator 251, e.g. a value retrieved from a payload length indication, PLI, field according to the ITU-T G.984 standard. In doing so, the optical network node 270 can determine the position of header 228, 231 based on the information within the error-corrected header 222, 228 of the preceding downstream frame 221, 227. By repeating this process at each header, the optical network node 270 can determine the position of the respective headers within the successive frames 220.

This localization process may thus start after error-correcting the first header 224 of the first frame within stream 210. The optical network node 270 may further be configured to locate this first header 224 within the stream 210 of FEC codewords based on a length of one or more synchronization structures 225, 226 that precede the frames 220 within the stream 210 of FEC codewords. The one or more synchronization structures 225, 226 may, for example, be a PSBd structure 225 and a FS header 226 as described in relation to Fig. 1. The length of the one or more synchronization structures 225, 226 may be predetermined and/or fixed. Alternatively or complementary, the length of the one or more synchronization structures 225, 226 may be retrieved from one or more of the respective synchronization structures. For example, the length of a PSBd structure 225 may be predetermined and fixed according to the PON standard, while the length of the FS header 226 may be retrieved from a data field within the FS header 226 by optical network node 270.

This however means that, if the optical network node 270 fails to error correct 301 a header, it may lose track of the position of the successive headers as it cannot retrieve the payload length 251 from the header. To this end, headers may be inserted at predetermined positions within the stream 210 of FEC codewords to serve as hooks or pick-up points where the optical network node can continue the steps 301 - 302 when it loses track of the header locations. For example, header 222 may be guaranteed at a predetermined position. Such a predetermined position may be fixed, e.g. every 25 µs. Alternatively or complementary, the transmitting network node can communicate the predetermined position to the optical network node in the downstream. In doing so, the optical network node 270 is provided in advance with some hooks or pick-up points where it knows that a header will be located.

According to an example embodiment, the optical network node 270 may further be configured to receive a stream 210 of FEC codewords 211 wherein one or more idle frames 221, 230 are inserted to control the FEC code rate. In other words, the stream of FEC codewords may comprise purposefully inserted or scheduled idle frames to adjust the relative amount of idle frames within the FEC codewords. This changes the portion of the FEC codewords that consist of redundant bits relative to the portion of actual information bits, as the optical network node replaces the idle frames with a known and correct idle bit pattern. As such, increasing the relative amount of idle frames decreases the FEC code rate, and decreasing the relative amount of idle frames increases the FEC code rate.

The idle frames may be scheduled within the respective FEC codewords by a transmitting network node within the PON that is configured to transmit the stream of FEC codewords to at least one optical network node that performs idle payload correction according to the present disclosure. The transmitting network node may, for example, be an OLT or an ONU.

This allows adjusting the effective FEC code during operation, i.e. on the fly, without additional communication to agree on a FEC code rate between the transmitting network node and the optical network node. This has the further advantage that the available or possible FEC code rate options are not limited to a predefined set of valid options. It is a further advantage that this allows controlling the FEC code rate in PON standards which have only a single FEC code rate defined, e.g. 50G PON.

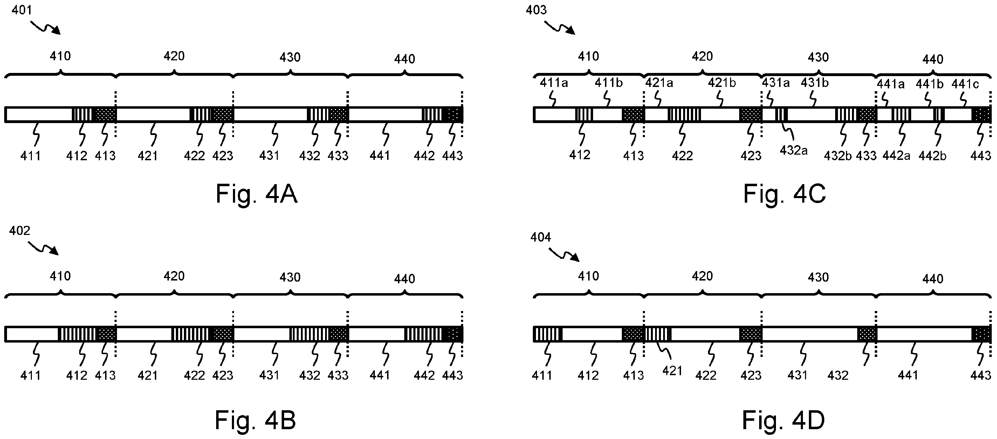

Fig. 4A and Fig. 4B show example embodiments of controlling the FEC code rate by scheduling idle frames 412, 422, 432, 442 within the respective FEC codewords 410, 420, 430, 440. As a first example, Fig. 4A shows a stream 401 with idle frames 412, 422, 432, 442 scheduled at the end of the respective FEC codewords 410, 420, 430, 440 as to decrease the FEC code rate at the receiving optical network node compared to FEC codewords without idle frames (not shown). As a second example, Fig. 4B shows a stream 402 wherein the idle frames 412, 422, 432, 442 are increased in size relative to the idle frames of stream 401, e.g. by the transmitting network node. In doing so, the FEC code rate can be further decreased at the receiving optical network node. Vice-versa, the transmitting network node may increase the FEC code rate by scheduling the smaller idle frames 412, 422, 432, 442 of stream 401 relative to the idle frames of stream 402.

Fig. 4C shows an example embodiment of a stream 403 of FEC codewords with idle frames 412, 422, 432a, 432b, 442a, 442b that are scheduled at different positions relative to stream 401, i.e. not only at the end of the codewords. Some of the idle frames, i.e. 432 and 442, may further be split into a plurality of idle frames, i.e. 432a, 432b, 442a, 442b. This makes the FEC code rate control more flexible and adjustable, e.g. depending on the data being transmitted and opportunities for idle frame insertion.

Fig. 4D shows an example embodiment of a stream 404 of FEC codewords with idle frames 411, 421 scheduled at the start of the first FEC codewords 410, 420. The successive FEC codewords 430, 440 may, but don't need to, have idle frames. This can for example allow introducing more protection at the beginning of an upstream burst transmitted by an ONU, as often the bit error rate, BER, is worse at the start of upstream transmissions as the optics are still settling.

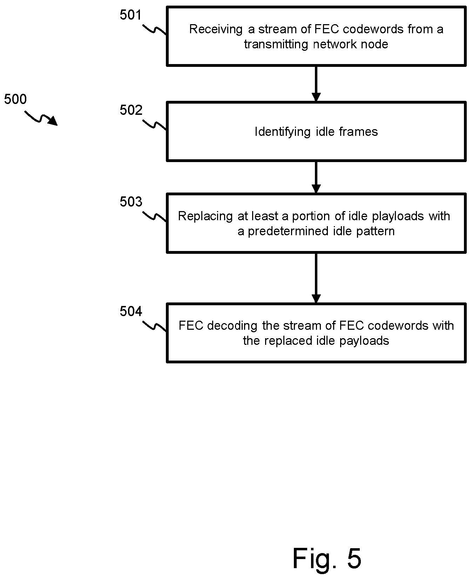

Fig. 5 shows steps 500 of a method for forward error correcting, FEC, decoding in a passive optical network, PON. The PON comprises an optical network node configured to perform the idle payload correction according to the present disclosure, e.g. an optical network node 270 as described in relation to Fig. 2 or Fig. 3. The PON further comprises a transmitting network node configured to transmit a stream of FEC codewords to the optical network node.

In a first step 501, the optical network node receives the stream of FEC codewords respectively comprising at least a portion of one or more frames from the transmitting network node. In a following step 502, the optical network node identifies idle frames within the respective FEC codewords of the stream of FEC codewords. In a next step 503, the optical network node replaces at least a portion of the idle payloads of the identified idle frames with a predetermined idle pattern. Thereafter, in step 504, the optical network node FEC decodes the stream of FEC codewords with the at least partially replaced idle payloads.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

As used in this application, the term "circuitry" may refer to one or more or all of the following: (a) hardware-only circuit implementations (such as implementations in only analogue and/or digital circuitry) and (b) combinations of hardware circuits and software, such as (as applicable): (i) a combination of analogue and/or digital hardware circuit(s) with software/firmware and (ii) any portions of hardware processor(s) with software (including digital signal processor(s)), software, and memory(ies) that work together to cause an apparatus to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware.

## Claims

1. An optical network node (270) configured to communicate in a passive optical network, PON (100); wherein the optical network node is configured to receive a stream (210) of forward error correction, FEC, codewords (211) respectively comprising at least a portion of one or more frames (220); wherein the respective frames comprise a header (222, 228) and a payload (223, 229); and wherein the optical network node is configured to perform:
- identifying (201) idle frames (221) within the respective FEC codewords (211) of the stream (210) of FEC codewords;
- for FEC codewords (211) that comprise at least a portion of one or more idle frames (221) , replacing (202, 241) at least a portion of the idle payloads (223) of the idle frames with a predetermined idle pattern (242); and
- thereafter, FEC decoding (203, 245) the stream of FEC codewords with the replaced idle payloads (244).

2. The optical network node according to claim 1, further configured to perform identifying (201) idle frames within the respective FEC codewords (211) of the stream (210) of FEC codewords based on a predetermined position (243) of the idle frames within the stream of FEC codewords.

3. The optical network node according to claim 1, further configured to perform identifying (301) idle frames (221) within the respective FEC codewords of the stream (210) of FEC codewords based on an identifier (232) included within the header (222, 228) of the respective frames (220).

4. The optical network node according to claim 3, wherein the header (222, 228) of the respective frames (220) further comprises one or more error correction bits (234) for error correcting the header; and wherein the optical network node is further configured to perform:
- error correcting (301, 311) the headers (222, 228) of the frames (220) based on the one or more error correction bits (234); and
- identifying (302, 313) idle frames (221) based on the identifier (232) within the error-corrected headers.

5. The optical network node according to any of claims 3 - 4, wherein identifying (201) idle frames (221) corresponds to identifying frames having a predetermined identifier value; and wherein replacing (202, 241) at least a portion of the idle payloads (223) of the idle frames (221) with the predetermined idle pattern (242) corresponds to replacing at least a portion of the payload of the identified frames with a predetermined bit pattern.

6. The optical network node according to any of the preceding claims, further configured to perform receiving predetermined idle pattern (242) information from a transmitting network node within the passive optical network that is configured to transmit the stream (220) of FEC codewords to the optical network node.

7. The optical network node according to any of claims 1 - 5, further configured to perform providing predetermined idle pattern information to a transmitting network node and instructing the transmitting network node to transmit the predetermined idle pattern as idle payload within idle frames, wherein the transmitting network node is configured to transmit the stream of FEC codewords to the optical network node.

8. The optical network node according to any of claims 1 - 5, further configured to perform determining the predetermined idle pattern (242) based on an FEC-decoded idle payload of at least one idle frame (221).

9. The optical network node according to any of the preceding claims, wherein the stream (401, 402, 403, 404) of FEC codewords comprises one or more idle frames (412, 422, 432, 432a, 432b, 442, 442a, 442b) inserted within the respective FEC codewords (410, 420, 430, 440) to control an FEC code rate.

10. The optical network node according to any of the preceding claims, wherein the predetermined idle pattern (242) is a fixed-valued bit sequence, a deterministically generated bit sequence using a predetermined seed, or a periodic bit sequence.

11. The optical network node according to any of the preceding claims, wherein replacing (202, 241) the idle payloads (223) of the idle frames (221) with the predetermined idle pattern (242) comprises adjusting bit values of the idle bits, adjusting signs of log-likelihood ratios of the idle bits, or adjusting signs and magnitudes of log-likelihood ratios of the idle bits.

12. The optical network node according to any of the preceding claims, wherein the optical network node (270) is an optical network unit, ONU (131 - 134), configured to communicate in a passive optical network, PON (100), with an optical line terminal, OLT (110); and wherein the ONU is configured to receive the stream (210) of FEC codewords (211) respectively comprising at least a portion of one or more downstream frames (220) broadcasted by the OLT over the PON.

13. The optical network node according to any of claims 1 - 11, wherein the optical network node (270) is an optical line terminal, OLT (110), configured to communicate in a passive optical network, PON (100), with one or more optical network units, ONUs (131 - 134); and wherein the OLT is configured to receive the stream (210) of FEC codewords (211) comprising at least a portion of one or more upstream frames (220) transmitted by the one or more ONUs.

14. A transmitting network node configured to transmit a stream (220, 401, 402, 403, 404) of forward error correction, FEC, codewords to at least one optical network node according to any of claims 1 - 13; wherein the stream of FEC codewords respectively comprise at least a portion of one or more frames (220); and wherein the respective frames comprise a header (222, 228) and a payload (223, 229); and wherein the optical network node is configured to perform:
- controlling an FEC code rate by scheduling one or more idle frames (412, 422, 432, 432a, 432b, 442, 442a, 442b) within respective FEC codewords (410, 420, 430, 440) of the stream (401, 402, 403, 404).

15. A method (500) for forward error correcting, FEC, decoding in a passive optical network, PON; wherein the PON comprises an optical network node (270) according to any of claims 1 - 13; the method comprising, by the optical network node:
- receiving (501) a stream of **FEC** codewords respectively comprising at least a portion of one or more frames from a transmitting network node within the PON;
- identifying (502) idle frames within the respective **FEC** codewords of the stream of **FEC** codewords;
- replacing (503) at least a portion of the idle payloads of idle frames within **FEC** codewords that comprise at least a portion of one or more idle frames with a predetermined idle pattern; and
- thereafter, **FEC** decoding (504) the stream of **FEC** codewords with the replaced idle payloads.
